# DEMANDE DE BREVET EUROPEEN

(11) **EP 0 773 516 A1**
(43) Date de publication de la demande: **14.05.1997**
(21) Numéro de dépôt: 96402426.9
(22) Date de dépôt: 13.11.1996
(51) Int. Cl.: G06T 15/70

(54) **Console de caméra virtuelle**

(30) Priorité: 13.11.1995 FR 9513411
(71) Demandeur: Atelier de Production Multimedia, 60200 Compiegne (FR)
(72) Inventeur: Garnier, Gérard, 60330 Lagny le Sec (FR)
(74) Mandataire: Debay, Yves

(57) **Abrégé**

La présente invention concerne une console de caméra virtuelle caractérisée en qu'elle comporte des moyens (11) de stockage d'un fichier de données représentatif de la position des objets ou acteurs réels participant à un événement;
des moyens (11) de stockage d'un fichier d'informations graphiques représentant des objets ou acteurs dans un espace limité ;
des moyens (10) de réception des informations en temps réel représentant les déplacements des objets ou acteurs avec identification des objets ou acteurs concernés ;
des moyens (12) d'exploitation des informations stockées et/ou transmises, des moyens (12) de calcul permettant, à partir de ces informations et d'une information définissant la position de la caméra virtuelle délivrée par des signaux de commande, de déterminer la vision des déplacements des acteurs ou objets dans l'espace limité en fonction des informations en temps réel ou reçues , et des moyens (13) de représenter cette vision des déplacements des acteurs ou objets.

## Description

La présente invention concerne une console de caméra virtuelle.

Le but de l'invention est de permettre à un utilisateur quelle que soit sa localisation, à partir d'un événement se produisant dans un espace limité, d'interagir sur la visualisation de cet événement.

Ce but est atteint par le fait que la console de caméra virtuelle comporte des moyens de stockage d'un fichier de données représentatif de la position des objets ou acteurs réels participant à un événement ;
des moyens de stockage d'un fichier d'informations graphiques représentant des objets ou acteurs dans un espace limité ;
des moyens de réception des informations en temps réel représentant les déplacements des objets ou acteurs avec identification des objets ou acteurs concernés ;
des moyens d'exploitation des informations stockées et/ou transmises, des moyens de calcul permettant, à partir de ces informations et d'une information définissant la position de la caméra virtuelle délivrée par des signaux de commande, de déterminer la vision des déplacements des acteurs ou objets dans l'espace limité en fonction des informations en temps réel ou reçues, et des moyens de représenter cette vision des déplacements des acteurs ou objets .

Selon une autre particularité la position de la caméra est définie par un moyen d'entrée de commandes de déplacement d'un objet représentatif de la position d'une caméra virtuelle, un logiciel d'interprétation des commandes permettant une visualisation de la position future de la caméra virtuelle et des moyens de valider cette position.

Selon une autre particularité les moyens sont un dispositif manche à balai (joystick).

Selon une autre particularité les moyens sont une souris.

Selon une autre particularité les moyens sont une boule de commandes (trackball).

Selon une autre particularité les moyens sont un boîtier à boutons multiples.

Selon une autre particularité les informations en temps réel sont transmises par le réseau de télécommunication à partir d'un dispositif numérique en liaison avec des capteurs disposés à des endroits déterminés de l'espace limité pour exploiter les signaux délivrés par ces capteurs.

Selon une autre particularité chaque objet ou acteur se déplaçant dans l'espace limité porte un dispositif émetteur pour envoyer un signal d'identification à chaque capteur disposé sur ou autour de l'espace limité pour, à partir des émissions de ces dispositifs émetteurs d'identification, déterminer, par l'exploitation de ces signaux par un dispositif de numérisation, la position des objets ou acteurs de façon à fournir pour chaque objet ou acteur un bloc d'information donnant la localisation en vue de sa transmission sur le réseau téléphonique.

Selon une autre particularité le bloc d'informations transmises comporte une information correspondant au numéro de badge, au moins deux informations sous forme de paire d'octets définissant la position de l'objet ou l'acteur.

Selon une autre particularité les dispositifs émetteurs sont des circuits électroniques de type intégré ou à micro circuit, émettant un signal de fréquence déterminé, lesdits circuits étant disposés avec des moyens d'alimentation dans les objets ou dans les vêtements des acteurs.

Selon une autre particularité chaque dispositif émetteur est synchronisé de façon à émettre ses signaux dans une fenêtre temporelle décalée en temps ou en fréquence par rapport aux fenêtres d'émission des autres dispositifs émetteurs, la fréquence d'émission de chaque fenêtre étant suffisante pour permettre une acquisition toutes les 40 millisecondes pour chacun des dispositifs émetteurs.

Selon une autre particularité le dispositif de numérisation transmet les blocs d'informations correspondant à un objet uniquement dans la mesure ou un déplacement a été détecté.

Selon une autre particularité le dispositif de numérisation comporte des moyens de calcul de la position d'un émetteur et des moyens de comparer la position acquise à un instant déterminé avec la position acquise précédemment pour déterminer s'il y a lieu de transmettre l'information.

Selon une autre particularité les moyens de stockage des fichiers de donnée ou des fichiers graphiques sont constitués d'un support magnétique ou optique ou à semi-conducteur.

D'autres particularités et avantages de la présente invention apparaîtront plus clairement à la lecture de la description ci-après faite en référence aux dessins annexés dans lesquels :
la figure 1 représente le schéma de principe général d'un système avec des consoles selon l'invention;
la figure 2 représente le schéma des circuits d'une console du système selon l'invention ;
les figures 3A et 3B représentent chacune une variante d'utilisation du système comportant un dispositif interactif ;
la figure 4 représente de façon schématique l'architecture du bloc d'information ;
la figure 5 représente l'algorithme général de fonctionnement du système ;
les figures 6A et 6C représentent les possibilités de représentation d'objets ;
la figure 7 représente l'algorithme de caméra virtuelle.

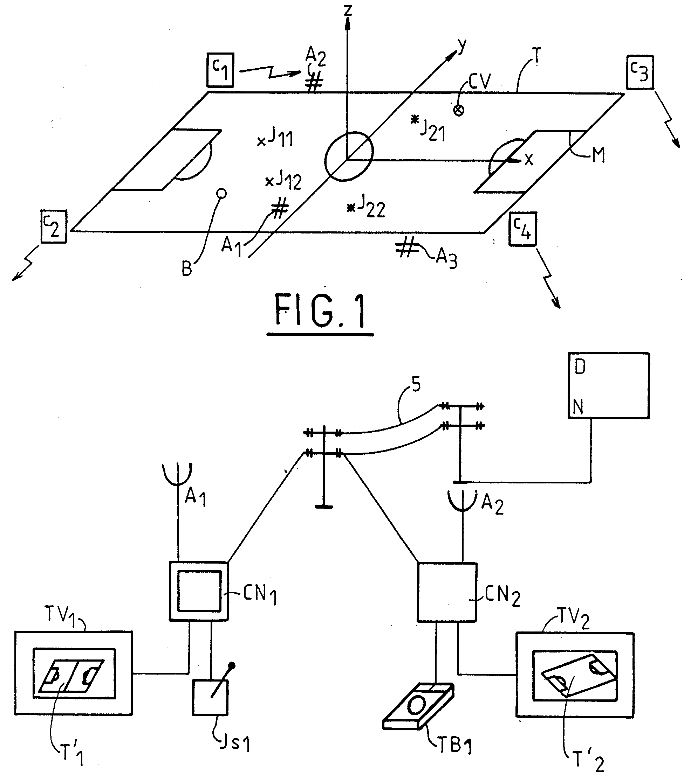

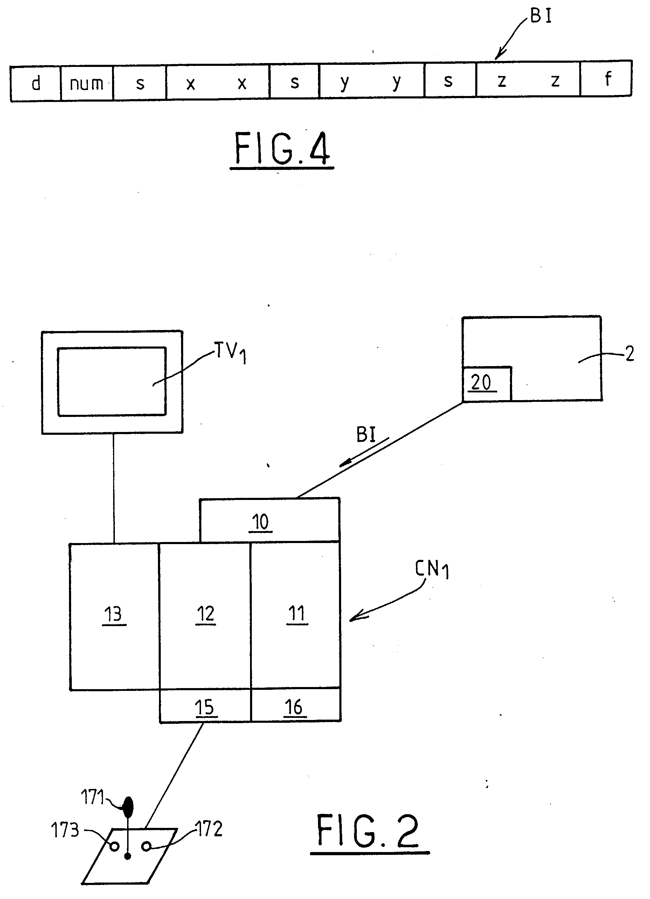

Le système selon l'invention va être décrit en liaison avec la figure 1 sur laquelle on peut voir un espace limité constitué, par exemple, par un terrain (T) de football pourvu de lignes de marquage (M) et d'un nombre de capteurs ou antennes C1 à C4 disposés en différents endroits stratégiques du terrain connus et repérés par rapport à un repère général fixe (ox, oy, oz). Le nombre de capteurs sera dépendant de la configuration du terrain et du dispositif d'exploitation des signaux et des capteurs pour arriver à déterminer la position des objets ou acteurs qui se déplacent dans l'espace limité constitué par le terrain. Ces capteurs C1 à C4 captent les ondes émises par les émetteurs portés chacun par un joueur et référencé (J₁₁) (J₁ⱼ) (J_{1 n}) pour la première équipe et (J _{2 l}) (J _{2 j}) (J _{2 n}) pour la deuxième équipe(B), pour le ballon (A ₁, A ₂, A ₃) pour chacun des arbitres. Chaque objet (J _{i j}, A ᵢ, B) ou joueur porte sur lui-même ou dans ses vêtements un dispositif émetteur constitué d'un circuit électronique de type intégré ou à micro circuit avec un dispositif d'alimentation. Le but du microcircuit est d'émettre des signaux d'identification en direction des capteurs sur une fréquence déterminée. Les signaux contenant un code d'identification (n) servent également aux capteurs à calculer le décalage dans le temps entre la réception par chaque capteur du signal d'un même dispositif émetteur d'un objet pour déterminer la localisation en coordonnées (x, y, z) de cet objet. Pour calculer cette position, on peut utiliser par exemple, la mesure de différences de phases entre les ondes reçues par les différents récepteurs. Dans le cas d'une source sphérique simple, cette différence de phase est directement proportionnelle à la différence de marche entre l'émetteur et les récepteurs. Un calcul d'interférométrie permet de calculer x, y, et z. Les dispositifs émetteurs sont prévus pour émettre leurs signaux d'identification dans des fenêtres temporelles décalées les unes par rapport aux autres de façon à ce que chaque capteur reçoive à un instant donné le signal d'un seul dispositif émetteur avec un décalage fréquentiel. La fréquence de répétition des fenêtres temporelles d'émission est telle que l'acquisition d'une nouvelle localisation pour chaque objet peut être faite dans un intervalle de temps défini par l'utilisateur et correspondant à une valeur maximale de 40 ms. Pendant cet intervalle les émetteurs (J _{i j}, A ᵢ, B) ont émis au moins une fois. Les signaux des capteurs sont envoyés vers un dispositif (DN) de numérisation de la localisation des objets et de gestion des acquisitions. Ce dispositif (DN) est constitué principalement par un ensemble calculateur, des circuits d'interface pour les capteurs recevant les signaux des capteurs et un modem de communication permettant d'envoyer par une liaison téléphonique (5) les informations nécessaires vers des consoles (CN1, CN2) elles-mêmes reliées d'une part à un dispositif d'entrée de commandes (JS1, TB1) et d'autre part aux téléviseurs respectifs (TV1, TV2) de chaque utilisateur. Ce dispositif (DN) sauvegarde les informations concernant le temps (t) de mesure, le numéro (n) de badge émetteur et la position x, y, z de l'acteur (n) au temps (t)sur une unité de sauvegarde pour une utilisation ultérieure. Dans le cas d'une utilisation en réseau, il agit aussi comme serveur d'informations, c'est à dire qu'il transmet sur le réseau (réseau informatique de type Ethernet) les informations sous le format explicité ultérieurement. Ces informations peuvent être captées par des clients pour un traitement graphique ou statistique. Les consoles (CN1, CN2) sont également reliées par des câbles coaxiaux à des antennes (A1, A2) permettant la réception des ondes contenant les informations de l'émission télévision. Ces consoles sont constituées comme représentées à la figure 2 d'un modem (10) qui permet les communications avec le dispositif numérique (DN), un processeur central (12) gérant à la fois le modem (10), une carte vidéo (13), une carte d'écriture lecture (11) dans une mémoire de masse une carte d'interface d'entrée de commandes (15) et éventuellement un circuit lecteur de carte à puce ou de carte magnétique ou de carte à mémoire (16) pour le paiement des droits d'accès au service de distribution en temps réel des informations. La carte vidéo (13) reçoit par un câble les signaux provenant d'une antenne de réception des émissions télévisées. La carte d'interface des entrées de commande (15) reçoit par exemple les signaux provenant d'un boîtier (JS1) de type manche à balai (17) pourvu d'un manche à balai (171) et de boutons de commande (173, 172). Un autre dispositif de commande (TB1) tel qu'une boule de commande (trackball) ou encore une souris ou un boîtier pourvu d'un ensemble de boutons potentiométriques peut constituer le dispositif d'entrée de commandes à partir du moment où il comporte les éléments suffisants pour permettre un déplacement d'un curseur visuel, représenté sur l'écran du téléviseur ou d'un moniteur, selon quatre directions et leur combinaison. Chaque console permet à chaque utilisateur en fonction des informations entrées par le dispositif d'entrée de commande (JS1 ) ou (TB1) et un programme d'agir sur la visualisation du match ou des événements se produisant dans l'espace limité en modifiant l'angle de vue de la retransmission ou en intervenant pour obtenir des renseignements ponctuels. La carte vidéo (13) permet le mixage des images virtuelles produites par la console C1 avec les images provenant de l'antenne ou selon le choix effectué par l'utilisateur le remplacement de tout ou partie de l'image télévisuelle par les images virtuelles. La carte de lecture écriture dans la mémoire de masse (11) permet de gérer soit un disque optique soit un disque CD-ROM soit une cassette à bande magnétique permettant le stockage d'informations numérisées. Ces moyens (11) de mémorisation de masse servent de moyens de stockage des fichiers d'informations concernant l'événement ou l'espace limité sur lequel se produit l'événement. Ainsi les fichiers peuvent comporter une base de donnée concernant les équipes, les joueurs de chaque équipe, le championnat ou les données du match. De même ces fichiers peuvent comporter les fichiers d'informations graphiques permettant de représenter les joueurs ainsi que les informations graphiques permettant de représenter les espaces limités tels que les terrains.

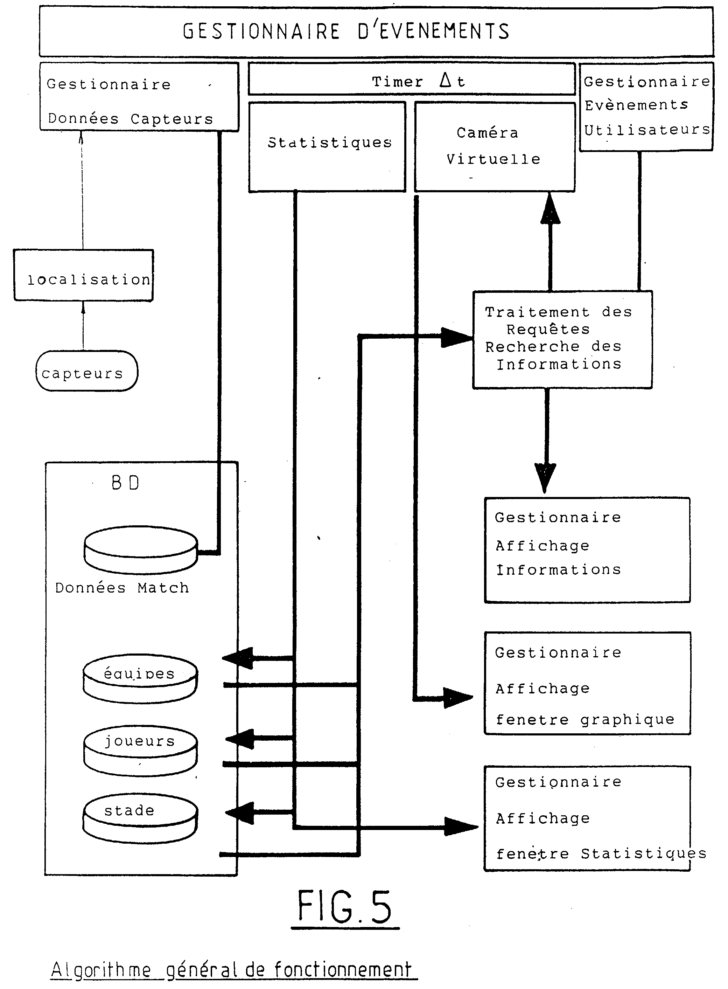

La console (CN1) comporte un logiciel d'exploitation qui à partir des informations graphiques et de base de donnée contenues dans les mémoires de masses d'une part et d'autre part à partir d'informations numériques temps réel arrivant par le modem sous forme de bloc d'informations (BI) élabore les informations graphiques visuelles à communiquer à la carte vidéo pour que celle-ci effectue soit le mixage soit la superposition avec les informations vidéo provenant de l'antenne. Les informations numériques qui arrivent par le modem sont constituées de blocs d'informations (BI) comme représentés figure 4 un premier caractère (d) qui permet de marquer le début du bloc, une information (num) qui est le numéro du badge traduit sous forme d'un octet. Un deuxième caractère (s) forme un séparateur de délimitation des informations puis le bloc comporte plusieurs paires d'octets (xx, yy, zz) qui permettent de coder les informations de position des joueurs ou des objets sous forme d'entier simple. Enfin le bloc d'informations se termine par un troisième caractère (f) qui permet de marquer la fin du bloc. Chaque bloc d'informations comporte donc 12 octets ce qui forme 96 bits d'informations à transférer avec une cadence de renouvellement des informations significatives correspondant à la cadence de renouvellement des images d'un téléviseur c'est-à-dire de 25 images par secondes. L'intervalle de temps entre chaque acquisition d'information pour un joueur est au minimum de 40 milli secondes lorsque le joueur se déplace. Ceci permet d'obtenir pour un événement nécessitant la description de 22 joueurs, 3 arbitres et un ballon c'est-à-dire 26 badges un débit maximum de 62 400 bits. Ce débit de 62 Kbits est compatible avec les réseaux type NUMERIS actuels. Toutefois ces blocs informations sont transférés sur le réseau uniquement s'ils sont significatifs, c'est à dire uniquement si l'un des objets a bougé. Dans le cas contraire, le système considère que l'objet conserve sa position précédente. Pour une utilisation en différée, il est possible d'ajouter le paramètre "Temps" à ce bloc informations pour avoir un repère temporel. Dans le cas d'un traitement en temps réel, cette information a moins d'importance : la station de traitement local prend toujours la dernière information sur le réseau.

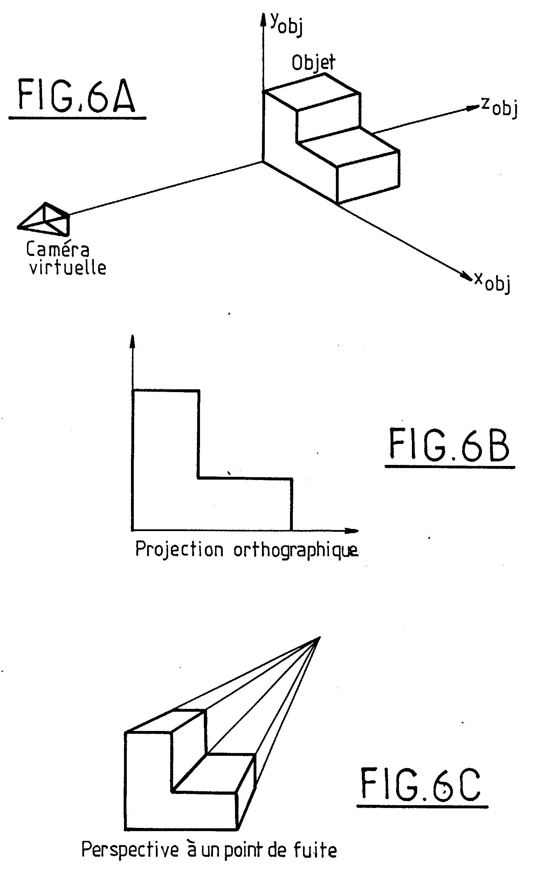

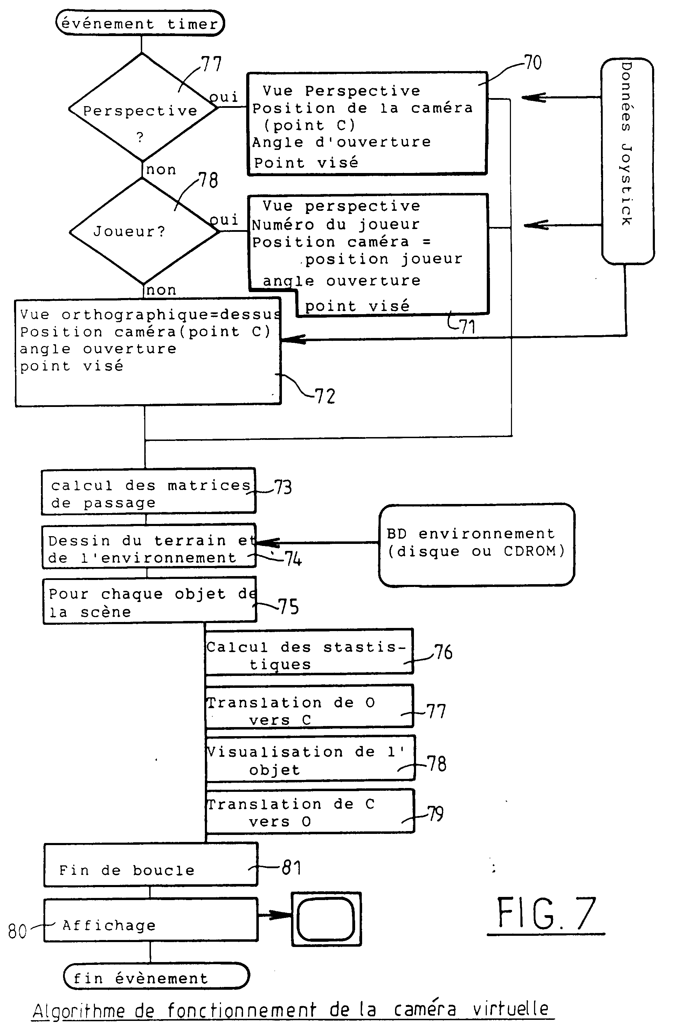

Le logiciel d'exploitation dont l'algorithme général est représenté (figure 5) comporte dans le module caméra virtuelle une interface permettant de déplacer un curseur représentatif de la caméra virtuelle (CV) sur la représentation graphique formée sur l'écran du moniteur ou de la télévision de l'espace limité (terrain) sur lequel se produit l'événement. La caméra virtuelle permet de positionner l'observateur à n'importe quel point de l'espace. Ce point peut être fixe ou mobile. Ce point (CV) peut être au dessus de l'espace, à l'intérieur ou l'extérieur ou même en un point qui serait normalement inaccessible à une caméra classique (en dessous du terrain par exemple). Sa position est calculée par rapport au repère général de l'espace. Connaissant la forme des objets mémorisée dans la base de donnée et leur position dans l'espace délivrée par exemple par le gestionnaire d'acquisition, il est possible de récréer une scène virtuelle reproduisant la scène réelle en utilisant les différents types de projection. Le logiciel détermine selon les choix initiaux effectués des projections orthographiques (72) représentant la vue du côté de la figure 6B, axonométriques ou perspectives (71) représentant la projection de l'objet de la figure 6C. Le logiciel peut également calculer des perspectives réalistes (à trois points de fuite). La position (72) de la caméra (CV) peut être modifiée à tout moment par l'utilisateur qui choisit suivant ses désirs, sa position de prise de vue. Tous les paramètres (70) de la caméra, comme par exemple l'angle d'ouverture sont également modifiables en temps réel part un menu approprié. Le curseur (CV) une fois amené dans la position souhaitée par l'utilisateur à l'aide du dispositif d'entrée de commandes tel que par exemple, le manche à balai (171) pour valider cette position en appuyant sur un bouton de commande du dispositif d'entrée tel que le bouton (173), par exemple, ce qui provoque la prise en compte de cette position par le logiciel de calcul de caméra virtuelle dont l'algorithme de fonctionnement est représenté à la figure 7. Ce logiciel à l'étape (77) compte tenu de la nouvelle position (C) définie pour la caméra de prise de vue virtuelle va redéfinir à l'étape (78) l'espace limité de représentation de l'événement et la représentation graphique de l'objet ou acteur en fonction de cette position de caméra virtuelle exécuter une boucle (81) pour chaque objet et fournir à l'étape (80) les signaux correspondants au moniteur ou au téléviseur. La caméra virtuelle fonctionne suivant le principe indiqué ci-dessus. Les paramètres (70) de la caméra sont réglables par l'utilisateur par l'intermédiaire d'un joystick (J_{S1}, figure 7) ou d'une boite à boutons. Au démarrage de l'application, trois positions sont proposées par défaut : soit une vue de dessus du terrain avec affichage automatique des numéros des joueurs ; soit une vue du terrain en perspective ; soit une vue mobile, la caméra étant fixée à un des objets. Les paramètres sont réglés pour avoir une vision similaire à l'oeil humain. Le logiciel de caméra virtuelle calcule alors la position courante de la caméra et calcule la matrice de passage (73) (rotations + translations) qui va permettre de passer du repère mobile caméra au repère général. La scène (74, 75) est recréée en mémoire suivant les nouveaux paramètres calculés, puis affichée. Dans les variantes de l'invention pour lesquelles le processeur graphique de la station de travail ou console le permet, il y a enlèvement des faces cachées, calcul des ombrages, prise en compte de phénomènes météo comme le brouillard. Le curseur dont les déplacements sont associés au mouvement du moyen de commande (JS1) et interprétés par un logiciel d'interface, peut également être amené sur un menu figurant dans une partie de la fenêtre visualisée sur l'écran du moniteur pour permettre l'affichage des informations graphiques représentatives de l'espace limité. Ce menu permet par action sur un bouton de commande (171) de faire apparaître les différents articles ou fonctions disponibles. Le déplacement du curseur permet d'amener une surbrillance sur l'une des fonctions disponibles pour ensuite déclencher cette fonction. Ainsi les événements qui peuvent se produire à l'aide de ce menu sont les clics sur le bouton "fenêtre statistique" qui permettent de déclencher l'affichage d'une fenêtre statistique remise à jour en fonction des événements à prendre en compte dans les statistiques. Le programme de statistiques (76) permet par exemple le calcul des statistiques suivantes à partir de la position des acteurs dans le temps, pour chaque acteur (joueurs, arbitres, ballon) le programme détermine sa vitesse,(instantanée, moyenne), accélération, puissance dégagée pour déplacer un acteur (puissance du shoot), temps d'occupation d'une zone déterminée (en minutes, secondes, %...), distance par rapport à un acteur déterminé (ex: ballon), distance parcourue, distance parcourue en contact avec un autre acteur tel que le ballon, estimation de l'énergie dépensée (en calorie), nombre d'actions déterminées (ex: nombre de tirs). Le programme calcule également des statistiques globales telles que la liste des acteurs les plus proches d'un point ou un acteur déterminé. Les statistiques pourront être différentes si l'on veut suivre un match de basket-ball ou de handball. Un autre événement est constitué par un clic sur le bouton "équipe" qui permet de provoquer l'affichage des informations sur les équipes accompagnée de la liste des joueurs. Cet affichage permet par un clic sur le "nom" d'un joueur d'une équipe de déclencher l'affichage des informations particulières sur le joueur ainsi que des statistiques sur ses performances. Un autre événement possible est un clic sur une roue "fenêtre de contrôle" qui permet de déclencher l'affichage d'une fenêtre permettant d'enregistrer des variables telles que les cartons jaunes ou rouges distribués aux joueurs au cours des événements ou des changements de joueurs en cours de match. Ainsi l'utilisateur peut à tout moment aller chercher des informations dans la base de données statique. Celle-ci contient des informations numériques et graphiques sur les différents acteurs. Dans le cas d'un match de football par exemple, la base de donnée peut contenir : les informations relatives au stade (forme, dimensions, nombre de places...) ; les informations relatives aux équipes (composition des équipes, entraîneurs, palmarès...) ; les informations relatives aux joueurs (photos, état-civil, performances, carrières...). Le support physique de cette base de donnée pourra être un disque dur classique pour les informations qui évoluent de match en match. Les informations qui n'évoluent que rarement comme la forme et les dimensions des stades pourront être stockés sur CD-ROM. L'utilisateur peut choisir à tout moment de visualiser l'information dont il a besoin. Les informations statiques et dynamiques s'afficheront simultanément dans la même fenêtre, le format de cette fenêtre est dépendant du jeu suivi. Ainsi lorsque par exemple un journaliste veut afficher la carte d'identité d'un joueur, le système affiche les données statiques (la photo du joueur, son état-civil, ses performances) ainsi que des données dynamiques (sa vitesse, les temps d'occupation dans chaque zone...). Dans le cas de certaines manifestations, des événements extérieurs devront être introduits par l'utilisateur. Dans le cas du football, par exemple, le logiciel ne peut pas savoir si l'arbitre a sanctionné un joueur d'un carton jaune. Une fenêtre de contrôle permet de saisir ces variables (buts, cartons jaunes et rouges, changement de joueurs...). De même, le début et la fin du match devront être signalés par l'utilisateur en régie. A la fin de chaque mi-temps et en fin de manifestation, les paramètres cumulatifs sont sauvegardés immédiatement dans la base de donnée. Enfin un dernier événement est constitué par un clic sur le bouton "quitter" du menu qui avant de quitter l'application demande une validation de cette commande. Le logiciel d'exploitation de la console comporte également une gestion des événements temporels qui se déclenchent à intervalles réguliers et dont la valeur est modifiable. Une boucle principale d'attente d'événements est basée sur la technologie Objet de gestion des événements. Le logiciel scrute à tout moment une pile d'événements. Lorsqu'un événement apparaît, il est automatiquement traité par le système. S'il ne peut être traité (cas où le processeur effectue déjà une tâche), il est empilé dans la pile. Lorsque le processeur a terminé la tâche en cours, l'événement est dépilé et traité. La pile d'événements est de type FIFO (First In- First Out) : le premier événement empilé est le premier sorti. Les processeurs supportant le logiciel doivent avoir des performances suffisantes pour que la pile d'événements ne grossisse pas trop vite. Si les événements ne peuvent être traités dès leur apparition, le système ne pourra pas fonctionner convenablement en temps réel. Un timer permet de séquencer les opérations. Tous les Δt, il génère un événement qui lance la procédure de mise à jour. Le Δt est fixé à 40ms pour obtenir un rafraîchissement des informations 25 fois par seconde. Cette valeur est modifiable. Plusieurs événements, sont pris en compte par le logiciel, tels que d'une part l'acquisition de nouvelles données qui sont sauvegardées directement et éventuellement sont mises à disposition des autres gestionnaires soit directement, soit par l'intermédiaire du réseau ; d'autre part les événements timer et les événements utilisateurs pour gérer les requêtes utilisateur. A chaque événement généré par le timer le système détermine par un premier test (77) s'il s'agit d'une vue en perspective puis calcule la position de la caméra virtuelle. Dans la négative du premier test (77) le système détermine un second test (78) si l'événement timer concerne un joueur et dans l'affirmative calcule les vitesses, dessine la fenêtre graphique, le terrain (74), les acteurs (75) (ballon, joueurs, arbitres) puis met à jour la fenêtre graphique et la fenêtre statistique.

Le logiciel d'exploitation de chaque console ou dispositif interactif s'exécute selon trois phases principales. Une première phases d'initialisation est suivie d'une deuxième phase qui est une boucle d'attente et de gestion des événements explicités ci-dessus et une troisième phase de sauvegarde finale. L'initialisation comporte la lecture des données du match, des équipes, des joueurs sur les mémoires de masse, l'initialisation des différents gestionnaires d'affichage graphique, d'affichage alphanumérique, d'informations et de fenêtres statistiques, l'initialisation des paramètres joueurs, la création des objets graphiques acteurs (joueurs), la création des objets graphiques espaces (terrain), la lecture des données terrain sur la mémoire de masse, la création des objets terrain, l'initialisation des interfaces, la création de la fenêtre de contrôle général et de la fenêtre graphique ainsi que l'initialisation des compteurs pour paramètres cumulatifs, tels que les distances parcourues, par exemple. L'affichage de la fenêtre de contrôle général s'effectue au début alors que l'affichage des fenêtres graphiques peut s'effectuer en cours de match de même que la sauvegarde des positions en x, en y, en z des joueurs peut s'effectuer soit en cours de match soit en fin de match. En fin de match le système effectue une mise à jour des bases de données concernant les joueurs, les équipes, les pays, les stades et les résultats du match.

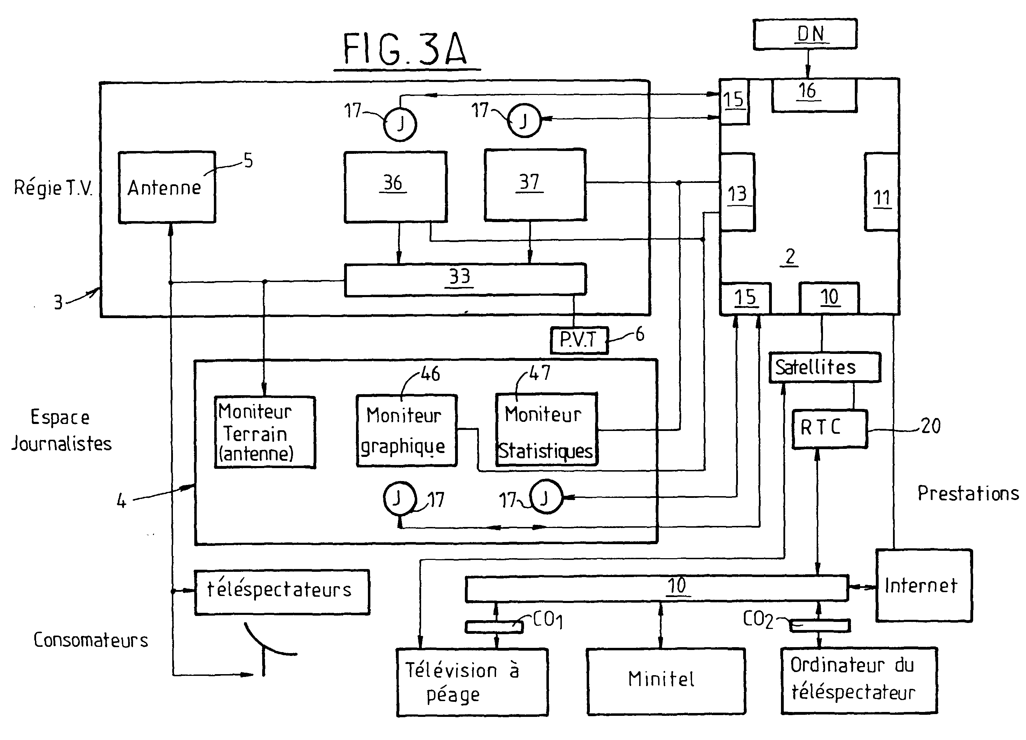

La figure 3A représente une autre variante du système de caméra virtuelle associé avec un dispositif interactif. Dans cette variante les consoles (CO1, CO2) comportent seulement la logique minimale pour gérer l'interface des dispositifs d'entrée et l'interface de communication type modem. Tout le reste de la logique et du matériel est transféré vers un dispositif interactif central (2) qui est relié d'une part aux consoles des utilisateurs (CO1, CO2) par les moyens de télécommunication tel qu'un réseau téléphonique commuté (20). Le dispositif interactif (2) comporte toutes les autres fonctionnalités de la console décrite précédemment et comporte en plus des cartes d'interface (15) supplémentaire pour recevoir les commandes des boîtiers manche à balai (17) d'un espace régie télévision (3) et d'un espace journaliste (4) et des interfaces (13) nécessaires pour envoyer les signaux de commandes des moniteurs graphiques ou statistiques respectivement (36, 37, 46, 47) mis à disposition dans les espaces régie de télévision (3) ou journaliste (4).

Le fonctionnement du dispositif interactif est le même que celui d'une console de la figure 2, si ce n'est qu'il peut prendre en compte selon le programme sélectionné, soit les entrées des commandes provenant de l'espace régie télévision, soit les entrées des commandes provenant de l'espace journaliste, soit les entrées de commande provenant de un ou plusieurs téléspectateurs sélectionnés. Dans ce cas les entrées de commandes permettent d'influencer sur la position de la caméra de prise de vue virtuelle et de modifier les images virtuelles générées. Ces images virtuelles générées sont envoyées en sortie des moniteurs graphiques (36, 37) de la régie télévision vers un mélangeur (33) qui reçoit d'un autre côté les signaux de caméra de prise de vue de télévision (6). Les images mélangées en sortie du mélangeur (33) sont ensuite diffusées à travers des émetteurs vers le réseau télédiffusion (5). On comprend que selon le mode de réalisation utilisé on peut, si l'on prend le mode de réalisation de la figure 3A, obtenir des images de caméra virtuelle sélectionnées dans un espace déterminé soit par les journalistes soit par les gens de régie soit par un ou plusieurs téléspectateurs puis les rediffuser à l'ensemble du réseau. Dans le cas de la réalisation représentée à la figure 2 chaque téléspectateur interagit individuellement par le biais de sa console et réalise sa propre vision du match. Ainsi on peut concevoir de vendre des cassettes, par exemple numériques, ou des disques type CD-ROM contenant toutes les informations et les fichiers nécessaires pour pouvoir exploiter le dispositif de caméra virtuelle lors de la retransmission d'un match donné. Ainsi les téléspectateurs pourvus d'une telle console (CN1) pourraient en début d'année ou en début de chaque mois aller s'approvisionner chez les distributeurs avec les informations nécessaires pour pouvoir ensuite interagir avec la retransmission ou peuvent par télépaiement et téléchargement sur leur console recevoir les droits d'accès et les fichiers d'information et de données nécessaires.

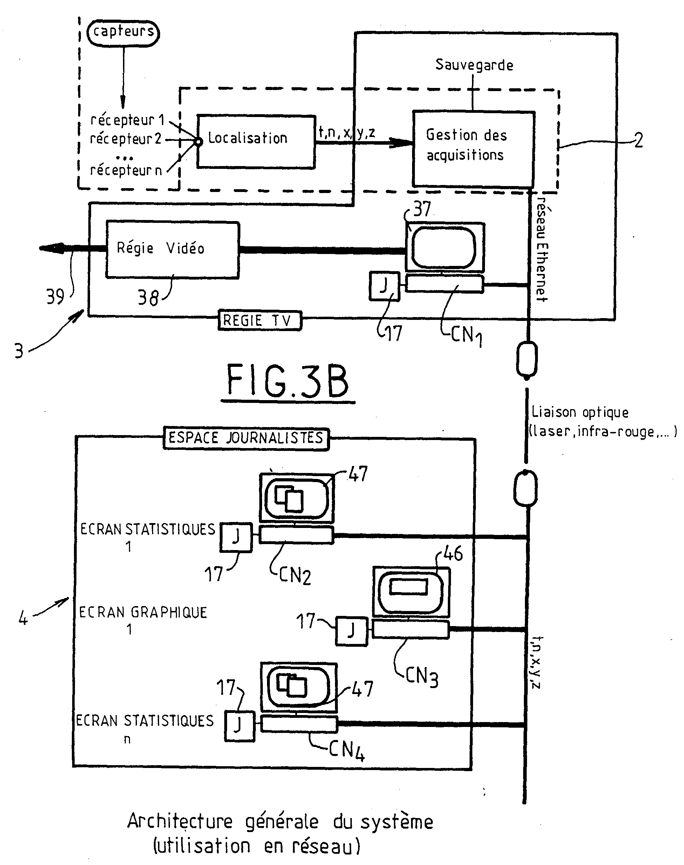

Enfin la figure 3B représente une deuxième variante de réalisation dans laquelle des consoles (CN1 à CN4) identiques à celles de la figure 2 sont reliées en réseau à une centrale d'acquisition (2) qui constitue un serveur et les consoles des espaces régies et journalistes des clients. Dans cette variante la régie vidéo (38) permet l'émission par le réseau de télédiffusion (39) vers les téléspectateurs des images élaborées par la console (CN1) alors que les autres consoles (CN2 à CN4) ne modifient les images que sur les moniteurs locaux (47, 46). Dans le cas d'un tel réseau, le système fonctionne suivant un modèle client-serveur modifié. Le serveur est constitué du processeur qui va gérer l'acquisition des données. Celui-ci est chargé de mettre à disposition sur le réseau, tous les Δt, les informations nécessaires au bon fonctionnement des clients. Les clients sont à l'écoute du réseau. Si le processeur d'un client n'est pas occupé par une tâche, il prend l'information qui transite et déclenche sont traitement. Les clients peuvent être décomposés entre clients graphiques, clients statistiques ou clients hybrides. Dans ce type de fonctionnement, et pour ne pas surcharger le réseau, les bases de données statiques seront dupliquées sur disque ou CD-ROM avant chaque manifestation et sur chaque poste.

D'autres modifications à la portée de l'homme de métier font également partie de l'esprit de l'invention.

## Revendications

1. Console de caméra virtuelle caractérisée en qu'elle comporte des moyens (11) de stockage d'un fichier de données représentatif de la position des objets ou acteurs réels participant à un événement ;
des moyens (11) de stockage d'un fichier d'informations graphiques représentant des objets ou acteurs dans un espace limité ;
des moyens (10) de réception des informations en temps réel représentant les déplacements des objets ou acteurs avec identification des objets ou acteurs concernés ;
des moyens (12) d'exploitation des informations stockées et/ou transmises, des moyens (12) de calcul permettant, à partir de ces informations et d'une information définissant la position de la caméra virtuelle délivrée par des signaux de commande, de déterminer la vision des déplacements des acteurs ou objets dans l'espace limité en fonction des informations en temps réel ou reçues, et des moyens (13) de représenter cette vision des déplacements des acteurs ou objets.

2. Console de caméra virtuelle selon la revendication 1, caractérisée en ce que la position de la caméra est définie par un moyen (15, 17) d'entrée de commandes de déplacements d'un objet représentatif de la position d'une caméra virtuelle, un logiciel d'interprétation des commandes permettant une visualisation de la position future de la caméra virtuelle et des moyens de valider cette position.

3. Console selon la revendication 2, caractérisée en ce que les moyens sont un dispositif manche à balai (joystick).

4. Console selon la revendication 2, caractérisée en ce que les moyens sont une souris.

5. Console selon la revendication 2, caractérisée en ce que les moyens sont une boule de commandes (trackball).

6. Console selon la revendication 2, caractérisée en ce que les moyens sont un boîtier à boutons multiples.

7. Console selon une des revendications précédentes caractérisée en ce que les informations en temps réel sont transmises par le réseau de télécommunication à partir d'un dispositif numérique en liaison avec des capteurs disposés à des endroits déterminés de l'espace limité pour exploiter les signaux délivrés par ces capteurs.

8. Console selon une des revendications précédentes, caractérisée en ce que chaque objet ou acteur se déplaçant dans l'espace limité porte un dispositif émetteur (J₁₁, J₁ₙ) pour envoyer un signal d'identification à chaque capteur (C1, Cn) disposé sur ou autour de l'espace limité pour, à partir des émissions de ces dispositifs émetteurs d'identification, déterminer, par l'exploitation de ces signaux par un dispositif de numérisation, la position des objets ou acteurs de façon à fournir pour chaque objet ou acteur un bloc d'informations en temps réel donnant la localisation en vue de sa transmission sur le réseau téléphonique.

9. Console selon la revendication 8, caractérisée en ce que le bloc d'informations transmises comporte une information correspondant au numéro de badge, au moins deux informations sous forme de paire d'octets définissant la position de l'objet ou l'acteur.

10. Console selon la revendication 8 ou 9, caractérisée en ce que les dispositifs émetteurs sont des circuits électroniques de type intégré ou à micro circuit, émettant un signal de fréquence déterminé, lesdits circuits étant disposés avec des moyens d'alimentation dans les objets ou dans les vêtements des acteurs.

11. Console selon la revendication 10, caractérisée en ce que chaque dispositif émetteur est synchronisé de façon à émettre ses signaux dans une fenêtre temporelle décalée en temps ou en fréquence par rapport aux fenêtres d'émission des autres dispositifs émetteurs, la fréquence d'émission de chaque fenêtre étant suffisante pour permettre une acquisition toutes les 40 millisecondes pour chacun des dispositifs émetteurs.

12. Console selon une des revendications précédentes, caractérisée en ce que le dispositif de numérisation (DN) transmet les blocs d'informations correspondant à un objet uniquement dans la mesure ou un déplacement a été détecté.

13. Console selon une des revendications précédentes, caractérisée en ce que le dispositif de numérisation comporte des moyens de calcul de la position d'un émetteur et des moyens de comparer la position acquise à un instant déterminé avec la position acquise précédemment pour déterminer s'il y a lieu de transmettre l'information par les moyens de transmission (20).

14. Console selon une des revendications précédentes, caractérisée en ce que les moyens de stockage des fichiers de donnée ou des fichiers graphiques sont constitués d'un support magnétique ou optique ou à semi-conducteur.
